# EUROPEAN PATENT APPLICATION

(11) **EP 1 566 316 A2**
(43) Date of publication of application: **24.08.2005**
(21) Application number: 05250374.5
(22) Date of filing: 26.01.2005
(51) Int. Cl.: B60R 25/00

(54) **Starter controller for vehicles**

(30) Priority: 30.01.2004 JP 2004023600
(71) Applicant: KABUSHIKI KAISHA TOKAI RIKA DENKI SEISAKUSHO, Aichi 480-0195 (JP)
(72) Inventor: Otani, Kazuya K. K. Tokai Rika Denki Seisakusho, Niwa-gun, Aichi 480-0195 (JP); Maeda, Toru K. K. Tokai Rika Denki Seisakusho, Niwa-gun, Aichi 480-0195 (JP); Nagae, Toshihiro K. K. Tokai Rika Denki Seisakusho, Niwa-gun, Aichi 480-0195 (JP)
(74) Representative: Sherrard-Smith, Hugh

(57) **Abstract**

A starter controller for preventing a starter motor from being driven when a steering device is locked. The starter controller supplies the starter motor with power from a power supply when both a starter enablement signal, for enabling the starter motor to be driven, and an unlock signal, for indicating that the steering wheel is unlocked, are received.

## Description

The present invention relates to a controller for a starter motor.

In a conventional vehicle, when starting the engine, an authentic mechanical key is inserted in a lock device and turned to unlock the steering wheel (refer to Japanese Laid-Open Patent Publication No. 2000-225922). The mechanical key is further turned to supply power to a starter motor. Accordingly, in the prior art, the supply of power to the starter motor is mechanically disabled when the steering wheel is locked.

A recent type of vehicle lock system includes a portable device carried by a user and a vehicle controller installed in a vehicle. Communication is performed between the portable device and the vehicle controller to authenticate the portable device (key). The vehicle controller unlocks the steering wheel when authentication is established and an engine switch is operated. Then, the vehicle controller provides a starter controller, which is installed in the vehicle, with a starter enablement signal. In response to the starter enablement signal, the starter controller supplies a starter motor with power. This drives the starter motor and starts the engine.

However, the conventional starter controller may supply the starter motor with power in response to the starter enablement signal regardless of whether the steering wheel is locked or unlocked. If an external factor, such as noise, causes the vehicle controller to provide the starter controller with the starter enablement signal, this would drive the starter motor and start the engine even when the steering wheel is locked.

It is an object of the present invention to provide a starter controller that does not drive a starter motor when a lock device is locked.

One aspect of the present invention is a starter controller for use with a starter motor, driven by power from a power supply, and a lock device. The starter controller includes a power supply control means for supplying the starter motor with the power from the power supply when both a starter enablement signal, for enabling driving of the starter motor, and an unlock signal, indicating that the lock device is unlocked, are received.

Another aspect of the present invention is a switch circuit for use with a lock device and arranged in a starter power supply path connecting a power supply and a starter motor driven by the power supply. The switch circuit includes an input terminal for receiving an unlock signal indicating that the lock device is locked. A switch device closes in response to the unlock signal.

A further aspect of the present invention is a restriction circuit for use with a lock device and connection to a starter control circuit that drives a starter motor. The restriction circuit includes an output terminal. An input terminal receives a starter enablement signal, for enabling the driving of the starter motor, and an unlock signal, indicating that the lock device is unlocked. The restriction circuit generates a power supply enablement signal and outputs the power supply enablement signal from the output terminal when both the starter enablement signal and the unlock signal are received.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a schematic block diagram showing a vehicle system according to a first embodiment of the present invention;
Fig. 2 is a block diagram of a starter controller shown in Fig. 1;
Fig. 3 is a schematic block diagram showing a vehicle system according to a second embodiment of the present invention;
Fig. 4 is a block diagram of a starter controller shown in Fig. 3;
Fig. 5 is a block diagram showing a starter controller according to a third embodiment of the present invention;
Fig. 6 is a block diagram showing a starter controller according to a fourth embodiment of the present invention;
Fig. 7 is a block diagram showing a starter controller according to a fifth embodiment of the present invention;
Fig. 8 is a block diagram showing a starter controller according to a sixth embodiment of the present invention;
Fig. 9 is a block diagram showing a starter controller according to a seventh embodiment of the present invention; and
Fig. 10 is a block diagram showing a starter controller according to an eighth embodiment of the present invention.

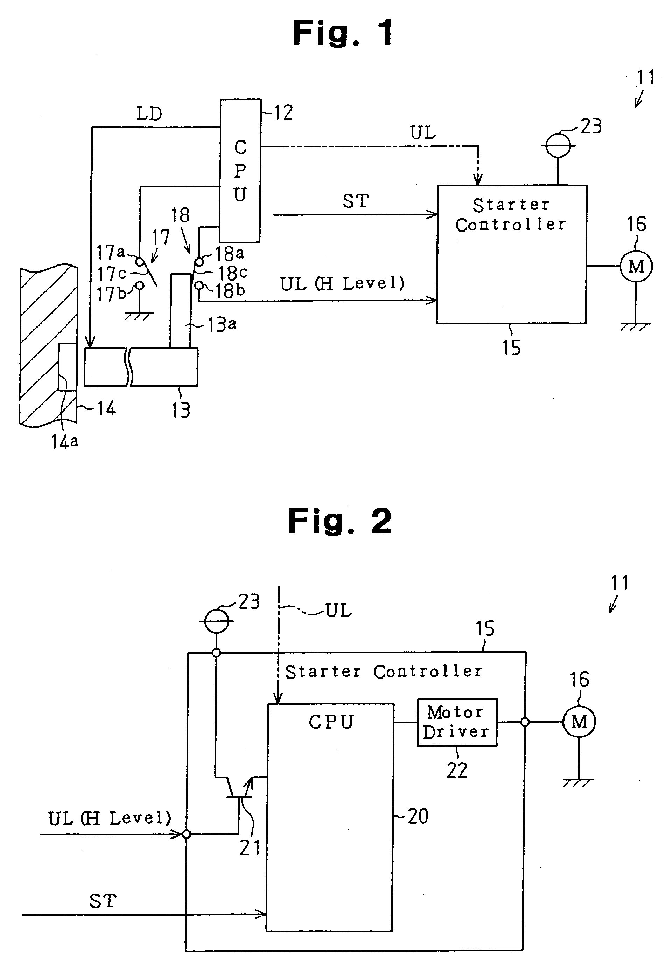

A starter controller 15 for a vehicle system 11 according to a first embodiment of the present invention will now be described with reference to Figs. 1 and 2.

Referring to Fig. 1, the vehicle system 11 is provided with a lock device, a steering shaft 14, the starter controller 15, and a starter motor 16. The lock device includes a central processing unit (CPU) 12 and a lock bar 13. The starter controller 15 serves as a power supply control means or a power supply controller. The CPU 12 serves as a lock control unit.

The CPU 12 provides the lock device with a lock drive signal LD. The lock device moves the lock bar in accordance with the lock drive signal LD to a lock position or an unlock position.

At the lock position, the lock bar 13 is fitted in a socket 14a formed in the steering shaft 14 to disable operation of the steering wheel. At the unlock position, the lock bar 13 is separated from the steering shaft 14 to enable operation of the steering wheel.

A lock switch 17 is arranged between the CPU 12 and ground. More specifically, the lock switch 17 has a first terminal 17a connected to the CPU 12 and a second terminal 17b connected to the ground. An unlock switch 18 is arranged between the CPU 12 and the starter controller 15. The unlock switch 18 has a first terminal 18a connected to the CPU 12 and a second terminal 18b connected to the starter controller 15. Normally open limit switches are used as the lock switch 17 and the unlock switch 18.

The lock bar 13 includes a contact piece 13a. Movement of the lock bar 13 to the lock position pushes a movable contact 17c with the contact piece 13a and closes the lock switch 17. When the lock switch 17 is closed, the lock switch 17 provides the CPU 12 with a lock signal indicating that the lock bar 13 is fitted in the socket 14a of the steering shaft 14.

Movement of the lock bar 13 to the unlock position pushes a movable contact 18c with the contact piece 13a and closes the unlock switch 18. When the unlock switch 18 is closed, the unlock switch 18 provides the CPU 12 and the starter controller 15 with an unlock signal UL (high level signal) indicating that the lock bar 13 is separated from the steering shaft 14.

The starter controller 15 supplies the starter motor 16 with power from a power supply 23 when the unlock signal UL and a starter enablement signal ST are both received.

The starter enablement signal ST is provided to the starter controller 15 from an external device or circuit, such as a vehicle controller (not shown). The vehicle controller functions to perform communication with a portable device (not shown), which is carried by, for example, a user, and authenticate the portable device (key). Then, the vehicle controller functions to provide the CPU 12 with a drive command signal for the lock bar 13 and provide the starter controller 15 with a starter operation controller signal.

The starter motor 16 is driven by the power supplied by the starter controller 15 to start the engine (not shown).

The starter controller 15 will now be described with reference to Fig. 2.

The starter controller 15 includes a CPU 20 functioning as a control circuit, a transistor 21 functioning as a restriction means or a restriction device, and a motor driver 22.

The transistor 21 is connected between the power supply 23 and the CPU 20. When the transistor 21 receives the unlock signal UL (high level signal) from the unlock switch 18, the power supply 23 supplies the CPU 20 with power.

The CPU 20 operates when powered by the power supply 23. When receiving the starter enablement signal ST during operation, the CPU 20 provides the motor driver 22 with a drive signal. The motor driver 22 drives the starter motor 16 in accordance with the drive signal. The starter motor 16 drives and starts the engine (not shown).

The vehicle system 11 operates as described below.

Referring to Fig. 1, the CPU 12 moves the lock bar 13 from the lock position to the unlock position or from the unlock position to the lock position.

Movement of the lock bar 13 to the lock position closes the lock switch 17. Thus, the lock switch 17 provides the lock signal to the CPU 12. The CPU 12 confirms from the lock signal that the lock bar 13 has moved to the lock position and then executes lock control.

Movement of the lock bar 13 to the unlock position closes the unlock switch 18. Thus, the unlock switch 18 provides the unlock signal UL to the CPU 12 and the transistor 21 (refer to Fig. 2) of the starter controller 15.

Referring to Fig. 2, when the transistor 21 receives the unlock signal UL, the CPU 20, which is powered by the power supply 23, starts to operate. When operated, the CPU 20 provides the motor driver 22 with the drive signal upon receipt of the starter enablement signal ST from the vehicle controller (not shown). The motor driver 22 drives the starter motor 16 in accordance with the drive signal. In this manner, the engine is started.

The vehicle system 11 of the present embodiment has the advantages described below.
(1) The operation of the CPU 20 is restricted depending on whether or not the transistor 21 is provided with the unlock signal UL. More specifically, the CPU 20 operates when the transistor 21 receives the unlock signal UL. The CPU 20 then supplies the starter motor 16 with power from the power supply 23 in accordance with the starter enablement signal ST. As long as the unlock signal UL is not provided to the transistor 21, the transistor 21 restricts the operation of the CPU 20, and the power supply 23 does not supply the starter motor 16 with power. Accordingly, the starter motor 16 is not driven when the lock bar 13 locks the steering wheel.
(2) When the transistor 21 is not provided with the unlock signal UL, the CPU 20 is cut off from the supply of power from the power supply 23. Thus, the starter motor 16 is not driven. This ensures that the starter controller 15 is prevented from driving the starter motor 16 when the steering wheel is locked.

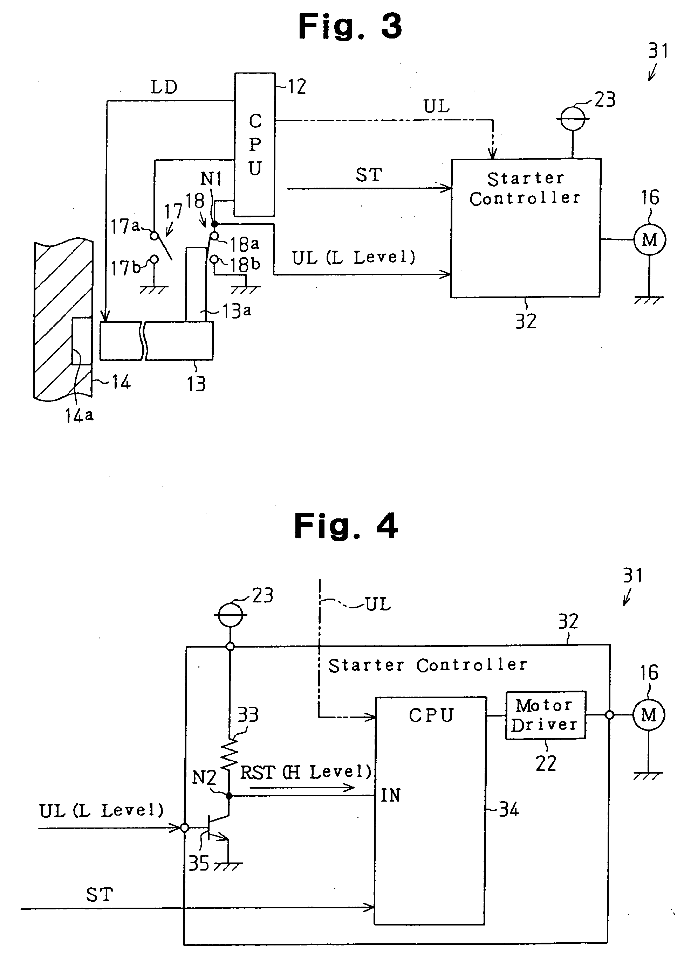

A starter controller 32 for a vehicle system 31 according to a second embodiment of the present invention will now be described with reference to Figs. 3 and 4.

To avoid redundancy, like or same reference numerals are given to those components that are the same or similar in all embodiments. In the second embodiment, the internal structure of the starter controller 15 and the connection of the unlock switch 18 differ from the first embodiment.

The vehicle system 31 includes a CPU 12, a lock bar 13, a steering shaft 14, with the starter controller 32 functioning as a power supply control means or a power supply controller, a starter motor 16, a lock switch 17, and an unlock switch 18.

The unlock switch 18 has a first terminal 18a and a second terminal 18b, which is connected to ground. The starter controller 32 is connected to a node N1 between the CPU 12 and the first terminal 18a of the unlock switch 18. When the unlock switch 18 is closed, the unlock switch 18 provides the CPU 12 and the starter controller 32 with an unlock signal UL (L level signal).

The starter controller 32 will now be described.

Referring to Fig. 4, the starter controller 32 includes a resistor 33, a CPU 34 functioning as a control circuit, a transistor 35 functioning as a restriction means or a restriction device, and a motor driver 22.

A power supply 23 is connected to the resistor 33. The CPU 34 has a reset terminal IN connected to a node N2 between the resistor 33 and the transistor 35. The node N2 is connected to the ground via the transistor 35.

The transistor 35 opens when it is provided with a unlock signal (low level) from the unlock switch 18. In this case, the power supply 23 does not provide the reset terminal IN of the CPU 34 with a reset signal RST via the resistor 33 and node N2. The transistor 35 closes when it is not provided with the unlock signal UL. In this case, the power supply 23 provides the reset terminal IN of the CPU 34 with a reset signal RST via the resistor 33 and node N2. That is, when the transistor 35 receives the unlock signal UL, the reset terminal IN stops receiving the reset signal RST.

When the reset terminal IN of the CPU 34 is provided with the reset signal RST, the CPU 34 is reset to an initial state. In other words, when the reset terminal IN continuously receives the reset signal RST, the CPU 34 remains in the initial state. If the CPU 34 receives a starter enablement signal ST when the reset signal RST is not received, the CPU 34 provides the motor driver 22 with a drive signal.

As described in the first embodiment, when receiving the drive signal, the motor driver 22 drives the starter motor 16, which, in turn, starts the engine (not shown).

In addition to the advantages of the first embodiment, the vehicle system 31 has the advantages described below.
(1) When the transistor 35 does not receive the unlock signal UL, the CPU 34 continuously receives the reset signal RST. Thus, the CPU 34 remains in the initial state in accordance with the reset signal RST. When the CPU 34 is in the initial state, the CPU 34 does not provide the motor driver 22 with the drive signal even when receiving the starter enablement signal ST. The reset signal RST stops when the transistor 35 receives the unlock signal UL. As a result, the CPU 34 immediately starts processing. Since the CPU 34 is kept in the initial state and thus remains activated, processing is started more quickly than when the CPU 34 must be activated to start processing. Accordingly, the starter controller 32 prevents the starter motor 16 from being driven when the steering wheel is locked. Further, the starter controller 32 readily drives the starter motor 16 upon receipt of the unlock signal UL.

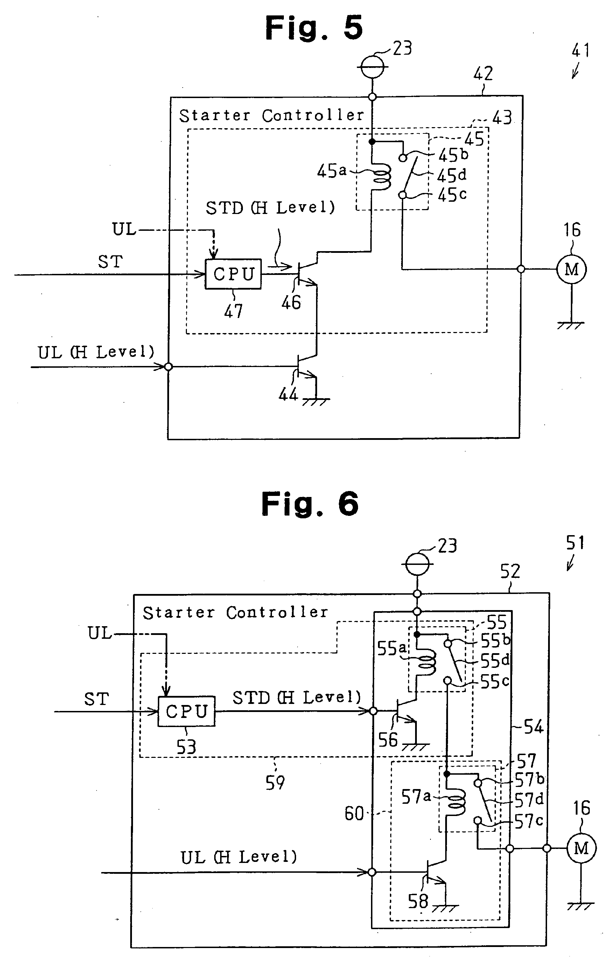

A starter controller 42 for a vehicle system 41 according to a third embodiment of the present invention will now be described with reference to Fig. 5. In the present embodiment, the vehicle system 41 is a modification of the starter controller 15 shown in Fig. 2.

In the vehicle system 41, the starter controller 42, which functions as a power supply control means or a power supply controller, includes a control circuit 43, functioning as a control circuit, and a transistor 44, functioning as a switch circuit. The control circuit 43 includes a relay 45, a transistor 46, and a CPU 47. The relay 45 includes a coil 45a, a positive terminal 45b, a negative terminal 45c, and a movable contact 45d.

The coil 45a, the transistor 46, and the transistor 44 are connected in series between the power supply 23 and ground. The positive terminal 45b of the relay 45 is connected to the power supply 23. The negative terminal 45c of the relay 45 is connected to the starter motor 16.

The CPU 47 provides the transistor 46 with a starter drive signal STD in accordance with the starter enablement signal ST. The transistor 46 closes in response to the starter drive signal STD. The transistor 44 closes in response to the unlock signal (H level signal).

The coil 45a is excited when the transistors 44 and 46 are both excited. This moves the movable contact 45d and connects the positive terminal 45b and the negative terminal 45c to supply the starter motor 16 with power from the power supply 23.

The vehicle system 41 of the present embodiment has the advantage described below.
(1) The starter motor 16 is supplied with power from the power supply 23 if the transistor 44 receives the unlock signal UL when the control circuit 43 receives the starter enablement signal ST. As long as the transistor 44 does not receive the unlock signal UL, the transistor 44 restricts the operation of the control circuit 43. Thus, the starter motor 16 is not supplied with power from the power supply 23. This prevents the starter motor 16 from being driven when the steering wheel is locked.

A starter controller 52 for a vehicle system 51 according to a fourth embodiment of the present invention will now be described with reference to Fig. 6. The vehicle system 51 of the present embodiment is a modification of the starter controller 15 shown in Fig. 2.

In the vehicle system 51, the starter controller 52, which functions as a power supply control means or a power supply controller, includes a CPU 53 and a switch device 54. The switch device 54 includes a relay 55, a transistor 56, a relay 57, and a transistor 58.

The CPU 53, the relay 55, and the transistor 56 configure a control circuit 59. The relay 57 and the transistor 58 configure a switch circuit 60.

The relay 55 includes a coil 55a, a positive terminal 55b, a negative terminal 55c, and a movable contact 55d. The relay 57 includes a coil 57a, a positive terminal 57b, a negative terminal 57c, and a movable contact 57d.

The coil 55a and the transistor 56 are connected in series between the power supply 23 and ground. The positive terminal 55b is connected to the power supply 23. The coil 57a and the transistor 58 are connected in series between the negative terminal 55c and the ground. The positive terminal 57b is connected to the negative terminal 55c, and the negative terminal 57c is connected to the starter motor 16.

The CPU 53 provides the transistor 56 with a starter drive signal STD (high level signal) in accordance with the starter enablement signal ST. The transistor 56 closes in response to the starter drive signal STD. This excites the coil 55a of the relay 55. The excited coil 55a moves the movable contact 55d to connect the positive terminal 55b and the negative terminal 55c.

The transistor 58 closes in response to the unlock signal UL (high level signal). If the transistor 58 closes when the positive terminal 55b and the negative terminal 55c are connected, the coil 57a of the relay 57 is excited. The excited coil 57a moves the movable contact 57d to connect the positive terminal 57b and the negative terminal 57c.

Accordingly, when the transistors 56 and 58 are both closed, the starter motor 16 is supplied with power from the power supply 23.

In addition to the advantages of the first embodiment, the vehicle system 51 of the present embodiment has the advantage described below.
(1) The starter motor 16 is supplied with power from the power supply 23 if the switch circuit 60 receives the unlock signal UL when the control circuit 59 receives the starter enablement signal ST. As long as the switch circuit 60 does not receive the unlock signal UL, the switch circuit 60 restricts the operation of the control circuit 59. Thus, the starter motor 16 is not supplied with power from the power supply 23 when the steering wheel is locked, and the starter motor 16 is not driven.

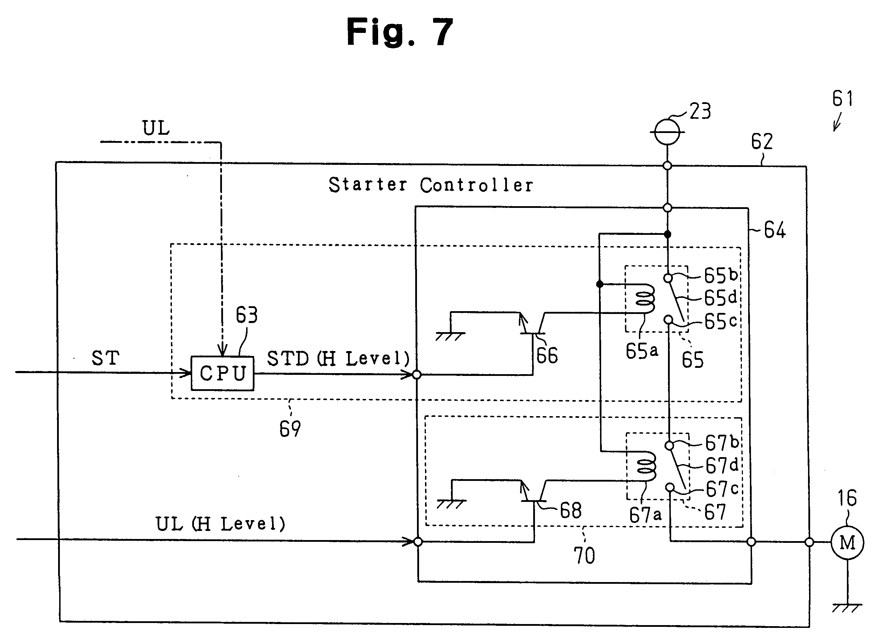

A starter controller 62 for a vehicle system 61 according to a fifth embodiment of the present invention will now be described with reference to Fig. 7. The vehicle system 61 of the present embodiment is a modification of the starter controller 15 shown in Fig. 2.

Referring to Fig. 7, in the vehicle system 61, the starter controller 62, which functions as a power supply control means or a power supply controller, includes a CPU 63 and a switch device 64. The switch device 64 includes a relay 65, a transistor 66, a relay 67, and a transistor 68.

The CPU 63, the relay 65, and the transistor 66 configure a control circuit 69. The relay 67 and the transistor 68 configure a switch circuit 70.

The relay 65 includes a coil 65a, a positive terminal 65b, a negative terminal 65c, and a movable contact 65d. The relay 67 includes a coil 67a, a positive terminal 67b, a negative terminal 67c, and a movable contact 67d.

The coil 65a and the transistor 66 are connected in series between the power supply 23 and ground. The coil 67a and the transistor 68 are connected in series between the power supply 23 and the ground. The positive terminal 65b is connected to the power supply 23, the negative terminal 65c is connected to the positive terminal 67b, and the negative terminal 67c is connected to the starter motor 16.

The CPU 63 provides the transistor 66 with a starter drive signal STD (high level signal) in accordance with the starter enablement signal ST. The transistor 66 closes in response to the starter drive signal STD. This excites the coil 65a and moves the movable contact 65d to connect the positive terminal 65b and the negative terminal 65c.

The transistor 68 closes in response to the unlock signal UL (high level signal). The coil 67a is excited when the transistor 68 closes. The excited coil 67a moves the movable contact 67d to connect the positive terminal 67b and the negative terminal 67c.

When the transistors 66 and 68 are both closed, the starter motor 16 is supplied with power from the power supply 23.

The vehicle system 61 of the present embodiment has the same advantage as advantage (1) of the vehicle system 51 of the fourth embodiment.

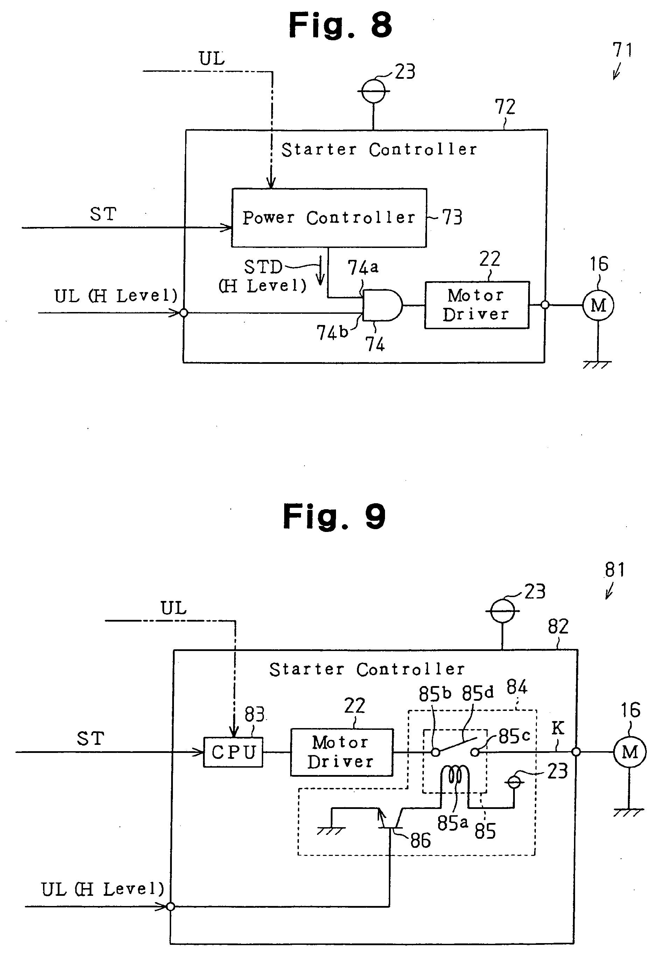

A starter controller 72 for a vehicle system 71 according to a sixth embodiment of the present invention will now be described with reference to Fig. 8. The vehicle system 71 of the present embodiment is a modification of the starter controller 15 shown in Fig. 2.

In the vehicle system 71, the starter controller 72, which functions as a power supply control means or a power supply controller, includes a power controller 73, which functions as a control circuit, an AND circuit 74, which functions as a switch circuit, and a motor driver 22.

The power controller 73 provides a first input terminal 74a of the AND circuit 74 with a starter drive signal STD (high level signal) in accordance with the starter enablement signal ST. The AND circuit 74 provides the motor driver 22 with a drive signal if its second input terminal 74b receives the unlock signal UL (high level signal) when its first input terminal receives a high level signal.

The motor driver 22 drives the starter motor 16 in accordance with the drive signal. This drives the starter motor 16 and starts the engine (not shown).

In addition to the advantages of the first embodiment, the vehicle system 71 of the present invention has the advantage described below.
(1) The starter motor 16 is supplied with power from the power supply 23 only when the starter enablement signal ST and the unlock signal UL are both provided to the starter controller 72. That is, the starter motor 16 is not supplied with power from the power supply 23 when the unlock signal UL is not provided to the starter controller 72. Thus, the starter motor 16 is not driven when the steering wheel is locked.

A starter controller 82 for a vehicle system 81 according to a seventh embodiment of the present invention will now be described with reference to Fig. 9. The vehicle system 81 of the present embodiment is a modification of the starter controller 15 shown in Fig. 2.

Referring to Fig. 9, in the vehicle system 81, the starter controller 82, which functions as a power supply control means or a power supply controller, includes a CPU 83, which functions as a control circuit, a motor driver 22, and a switch circuit 84. The switch circuit 84 includes a relay 85, which functions as a switch device, and a transistor 86. The relay 85 includes a coil 85a, an upstream terminal 85b, a downstream terminal 85c, and a movable contact 85d. The upstream terminal 85b is connected to the motor driver 22, and the downstream terminal 85c is connected to the starter motor 16.

The relay 85 of the switch circuit 84 is arranged in the power supply path K between the motor driver 22 and the starter motor 16. The CPU 83 provides the motor driver 22 with a drive signal in accordance with the enablement signal. The motor driver 22 drives the starter motor 16 in accordance with the drive signal when the upstream terminal 85b and the downstream terminal 85c are not connected by the movable contact 85d.

The coil 85a and the transistor 86 are connected in series between the power supply 23 and ground. The transistor 86 excites the coil 85a in response to the unlock signal UL (high level signal). The excited coil 85a moves the movable contact 85d and connects the upstream terminal 85b and the downstream terminal 85c.

The vehicle system 81 of the present embodiment has the advantage described below.
(1) The switch circuit 84 is arranged in the power supply path K. As long as the switch circuit 84 does not close, power is not supplied from the motor driver 22 to the starter motor 16. The switch circuit 84 closes when receiving the unlock signal UL. That is, the switch circuit 84 restricts the operation of the motor driver 22 as long as the switch circuit 84 does not receive the unlock signal UL. Thus, the starter motor 16 is not driven when the steering wheel is locked.

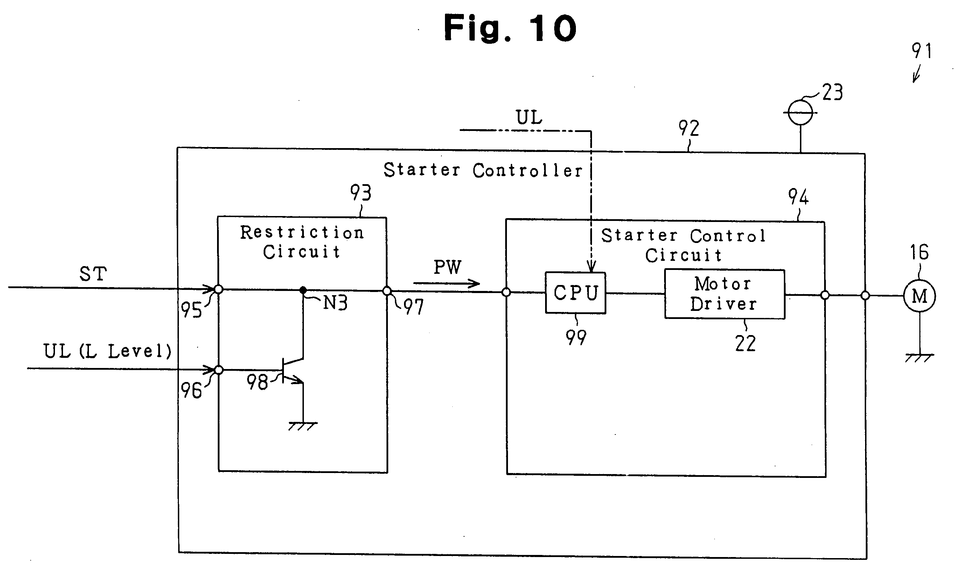

A starter controller 92 for a vehicle system 91 according to an eighth embodiment of the present invention will now be described with reference to Fig. 10. The vehicle system 91 of the present embodiment is a modification of the starter controller 32 shown in Fig. 4.

Referring to Fig. 10, in the vehicle system 91, the starter controller, which functions as a power supply control means or a power supply controller, includes a restriction circuit 93 and a starter control circuit 94.

The restriction circuit 93 includes a first input terminal 95, a second input terminal 96, an output terminal 97, and a transistor 98.

In the restriction circuit 93, the transistor 98 is connected to a node N3 between the first input terminal 95 and the output terminal 97. The transistor 98 is connected to the second input terminal 96 and ground. The restriction circuit 93 restricts operation of the starter control circuit 94.

The transistor 98 opens when the second input terminal 96 receives the unlock signal UL (low level signal). The transistor 98 closes when the second input terminal 96 does not receive the unlock signal UL.

If the first input terminal 95 receives the starter enablement signal ST (high level signal), the starter enablement signal ST does not flow to the ground when the transistor 98 is open. In this case, the restriction circuit 93 outputs a power supply enablement signal PW having a high level from the output terminal 97.

The starter enablement signal ST (high level signal) flows to the ground via the transistor 98 when the transistor 98 is closed. In this case, the restriction circuit 93 does not output the power supply enablement signal PW having a high level from the output terminal 97.

In this manner, the restriction circuit 93 outputs the power supply enablement signal PW when the starter signal ST and the unlock signal UL are both received.

The starter control circuit 94 includes a CPU 99, which functions as a control circuit, and a motor driver 22. The CPU 99 provides the motor driver 22 with a drive signal in accordance with the power supply enablement signal PW.

The motor driver 22 drives the starter motor 16 in accordance with the drive signal. The starter motor 16 is driven to start an engine (not shown).

The vehicle system 91 of the present embodiment has the advantage described below.
(1) The starter controller 92 includes the restriction circuit 93 and the starter control circuit 94. A typical control circuit of the prior art may be used as the starter control circuit 94. The restriction circuit 93 outputs the power supply enablement signal PW when the starter enablement signal ST and the unlock signal UL are both received. The starter control circuit 94 drives the starter motor 16 in accordance with the power supply enablement signal PW. As long as the restriction circuit 93 does not receive the unlock signal UL, the restriction circuit 93 restricts the operation of the starter control circuit 94 and does not drive the starter motor 16. Thus, the starter motor 16 is not driven when the steering wheel is locked.

It should be apparent to those skilled in the art that the present invention may be embodied in many other specific forms without departing from the spirit or scope of the invention. Particularly, it should be understood that the present invention may be embodied in the following forms.

In the first to eighth embodiments, the starter motor 16 is supplied with power from the power supply 23 when the starter enablement signal ST from the vehicle controller (not shown) and the unlock signal UL from the unlock switch 18 are both provided to the starter controllers 15, 32, 42, 52, 62, 72, 82, and 92. However, the present invention is not limited to such configuration. For example, the starter controllers 15, 32, 42, 52, 62, 72, 82, and 92 may supply the starter motor 16 with power from the power supply 23 when provided with the two signals ST and UL and another unlock signal UL from the CPU 12. In the embodiment of Fig. 2, the CPU 20 may provide the motor driver 22 with a drive signal when, during activation, receiving an unlock signal UL from the CPU 12 and the starter enablement signal ST. In the embodiment of Fig. 4, the CPU 34 may provide the motor driver 22 with the drive signal if an unlock signal UL from the CPU 12 and the starter enablement signal ST are received when the reset signal RST is not received. In the embodiment of Fig. 5, the CPU 47 may provide the transistor 46 with the starter drive signal STD when an unlock signal UL from the CPU 12 and the starter enablement signal ST are received. In the embodiment of Fig. 6, the CPU 53 may provide the transistor 56 with the starter drive signal STD when an unlock signal UL from the CPU 12 and the starter enablement signal ST are received. In the embodiment of Fig. 7, the CPU 63 may provide the transistor 66 with the starter drive signal STD when an unlock signal UL from the CPU 12 and the starter enablement signal ST are received. In the embodiment of Fig. 8, the power controller 73 may provide the first input terminal 74a of the AND circuit 74 with a high level signal (STD) when an unlock signal UL from the CPU 12 and the starter enablement signal ST are received. In the embodiment of Fig. 9, the CPU 83 may provide the motor driver 22 with the drive signal when an unlock signal UL from the CPU 12 and the starter enablement signal ST are received. In the example of Fig. 10, the CPU 99 may provide the motor driver 22 with the drive signal when an unlock signal UL from the CPU 12 and the power supply enablement signal PW are received. In such configurations, the driving of the starter motor 16 when the steering wheel is locked is prevented in a more ensured manner.

The present examples and embodiments are to be considered as illustrative and not restrictive, and the invention is not to be limited to the details given herein, but may be modified within the scope and equivalence of the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A starter controller for use with a starter motor (16), driven by power from a power supply (23), and a lock device (13), the starter controller **characterized by**:
a power supply control means for supplying the starter motor with the power from the power supply when both a starter enablement signal (ST), for enabling driving of the starter motor, and an unlock signal (UL), indicating that the lock device is unlocked, are received.

2. The starter controller according to claim 1, wherein the power supply control means includes:
a control circuit (20, 34) for outputting a drive signal to drive the starter motor in accordance with the starter enablement signal; and
a restriction means (21, 35), connected to the control circuit, for restricting operation of the control circuit in accordance with the unlock signal, the control circuit disabling the supply of power to the starter motor when the restriction means restricts operation of the control circuit.

3. The starter controller according to claim 2, wherein power is supplied from the power supply to the control circuit, and the restriction means includes a switch device (21) activated in accordance with the unlock signal, the switch device cutting the supply of power to the control circuit from the power supply when the unlock signal is not received, and the switch device enabling the supply of power to the control circuit from the power supply when the unlock signal is received.

4. The starter controller according to claim 2, wherein the restriction means includes a switch device (35) activated in accordance with the unlock signal, wherein the switch device provides the control circuit with a reset signal (RST) when the unlock signal is not received to disable processing with the control circuit, and the switch device stops providing the control circuit with the reset signal when the unlock signal is not received to enable processing with the control circuit.

5. The starter controller according to claim 1, wherein the power supply control means includes:
a control circuit (43, 59, 69) for controlling the supply of power to the starter motor from the power supply in accordance with the starter enablement signal; and
a switch circuit (44, 60, 70) connected to the control circuit and operated in accordance with the unlock signal, the switch circuit enabling supply of power to the starter motor from the power supply in response to the unlock signal when the control circuit receives the starter enablement signal.

6. The starter controller according to claim 1, wherein the power supply control means includes:
a motor driver (20) for driving the starter motor with the power from the power supply;
a control circuit (83), connected to the motor driver, for providing the motor driver with a drive signal in accordance with the starter enablement signal; and
a switch circuit (84), connected between the motor driver and the starter motor, for closing when the unlock signal is received.

7. The starter controller according to claim 1, wherein the power supply control means includes:
a restriction circuit (93) for generating a power supply enablement signal (PW) when both the starter enablement signal and the unlock signal are received; and
a starter control circuit (94) connected to the restriction circuit and including;
a motor driver (22) for driving the starter motor with the power from the power supply; and
a control circuit (99) for providing the motor driver with a drive signal in accordance with the starter enablement signal.

8. A switch circuit (84) for use with a lock device (13) and arranged in a starter power supply path connecting a power supply (23) and a starter motor (16) driven by the power supply, the switch circuit comprising:
an input terminal for receiving an unlock signal indicating that the lock device is locked; and
a switch device (85) that closes in response to the unlock signal.

9. A restriction circuit (93) for use with a lock device (13) and connection to a starter control circuit (94) that drives a starter motor (16), the restriction circuit comprising:
an output terminal (97); and
an input terminal (95, 96) for receiving a starter enablement signal (ST), for enabling the driving of the starter motor, and an unlock signal (UL), indicating that the lock device is unlocked;
wherein the restriction circuit generates a power supply enablement signal (PW) and outputs the power supply enablement signal from the output terminal when both the starter enablement signal and the unlock signal are received.
